# EUROPEAN PATENT APPLICATION

(11) **EP 4 411 908 A1**
(43) Date of publication of application: **07.08.2024**
(21) Application number: 23214731.4
(22) Date of filing: 06.12.2023
(51) Int. Cl.: H01M 10/04, H01M 10/0525, H01M 10/0587, H01M 50/103, H01M 50/15, H01M 50/167, H01M 50/474, H01M 50/477, H01M 50/48, H01M 50/489

(54) **POWER STORAGE DEVICE AND METHOD FOR PRODUCING THE SAME**

(30) Priority: 06.02.2023 JP 2023015993
(71) Applicant: Prime Planet Energy & Solutions, Inc., Chuo-ku Tokyo 103-0022 (JP)
(72) Inventor: UCHIDA, Yozo, Tokyo, 103-0022 (JP)
(74) Representative: Kuhnen & Wacker Patent- und Rechtsanwaltsbüro PartG mbB

(57) **Abstract**

A power storage device (1) includes a case (10) provided with a bottomed rectangular cylindrical case body (21) constituting a second primary wall portion (12) and four side wall portions (13,14,15,16) and a rectangular lid (31) constituting a first primary wall portion (11). The first primary wall portion (11) and the second primary wall portion (12) are to elastically compress an electrode laminated portion (50e) of an electrode body (50). There are provided a plurality of bent ridge portions (41,42,46,47) extending toward an upper side (AH1) at an axial inner side (DH3), being bent, and further extending toward an axial outer side (DH4) to press the electrode laminated portion (50e) so that an impregnated electrolytic solution (3a) is restricted from moving to lower portions (50ega) of both end portions (50eg) of the electrode laminated portion (50e).

## Description

### BACKGROUND

### Technical Field

The present disclosure relates to a rectangular power storage device in which an electrode body is housed in a rectangular parallelepiped box-like case and a method for producing the power storage device.

### Related Art

Among rectangular batteries in each of which an electrode body is housed in a rectangular parallelepiped box-like case, particularly, a battery mounted on a vehicle and the like for long time use is generally formed with external binding by use of an external binding member formed of a pair of end plates and a plurality of binding bands for the purpose of improving the characteristics of charge and discharge cycles and others. As a result of this, in a battery in which a flat-wound electrode body is housed in a case, an electrode laminated portion in which a positive electrode plate, a negative electrode plate, and a separator are laminated in a flat-plate like shape, of the electrode body, is in a state pressed in an electrode body thickness direction. Related prior arts include Patent Document 1 (see FIG. 1 and others of the Patent Document 1), for example.

### Related Art Documents

### Patent Documents

Patent Document 1: JP2020-173893A

### SUMMARY

### Technical Problems

However, binding a battery from outside with a binding member causes problems such as increase in cost, increase in a frame size, increase in weight, increase in the number of components, and others.

Further, there is another problem that an impregnated electrolytic solution which has been impregnated in the electrode body is pushed out of the electrode body in use of the battery, so that the impregnated electrolytic solution contributing to charging and discharging could be reduced. An electrode body expands and contracts in association with charging and discharging. When the electrode body expands inside a case, the impregnated electrolytic solution is pushed out of the electrode body through both end portions in an electrode body axial direction of the electrode body. As a result of this, less impregnated electrolytic solution can contribute to charging and discharging, which could cause decrease in a battery capacity but increase in a battery resistance.

The present disclosure has been made in view of the above circumstances and has a purpose of providing a power storage device achieving elastic compression of an electrode laminated portion of a flat-wound electrode body in an electrode body thickness direction by the power storage device itself and achieving prevention of outflow of an impregnated electrolytic solution outside the electrode body in use of the power storage device, and also the present disclosure has a purpose of providing a method for producing the power storage device.

### Means of Solving the Problems

(1) One aspect of the present disclosure to solve the above problem is to provide a power storage device comprising: a case; an electrode body housed in the case; and an impregnated electrolytic solution impregnated in the electrode body, the case being of a parallelepiped box-like shape and provided with: a first primary wall portion of a rectangular shape; a second primary wall portion of a rectangular shape opposing to the first primary wall portion; and four side wall portions, each of which is of a rectangular shape, connects the first primary wall portion and the second primary wall portion, and extends in a case thickness direction, the electrode body being configured as a flat wound electrode body in which a positive electrode plate of a strip shape and a negative electrode plate of a strip shape are flat-wound via a pair of separators of strip shapes, the electrode body including an electrode laminated portion of a parallelepiped shape in which the positive electrode plate, the negative electrode plate, and the separators are laminated in a flat plate-like shape in an electrode body thickness direction, and the electrode body being housed in the case in such a position that the electrode body thickness direction is in parallel to the case thickness direction, wherein the case includes: a case body of a bottomed rectangular cylindrical shape configuring the second primary wall portion and the four side wall portions and being formed with an opening of a rectangular shape configured by the four side wall portions; and a lid of a rectangular shape configuring the first primary wall portion in which a lid peripheral edge portion is joined to an entire circumference of an opening peripheral edge portion of the opening of the case body, the first primary wall portion and the second primary wall portion of the case elastically compress the electrode laminated portion of the electrode body in the electrode body thickness direction, the power storage device includes a plurality of bent ridge portions protruding toward a thickness direction inner side of the case thickness direction in the case, the bent ridge portions having any one of: a configuration of extending at an axial inner side from a lower side to an upper side of the electrode body axial direction, being bent to an axial outer side in the electrode body axial direction, and extending further to the axial outer side; and a configuration of being bent at the axial inner side to the axial outer side from the lower side and extending further to the axial outer side when the power storage device is placed in a manner that the electrode body axial direction and the electrode body thickness direction of the electrode body are in parallel to a horizontal direction, and the bent ridge portions being configured to press the electrode laminated portion of the electrode body by elastic compression of the first primary wall portion and the second primary wall portion to restrict movement of the impregnated electrolytic solution to a lower portion of both end portions in the electrode body axial direction of the electrode laminated portion.

The above-mentioned power storage device is configured to elastically compress the electrode laminated portion of the electrode body in the electrode body thickness direction by the first primary wall portion and the second primary wall portion of the case. In other words, this power storage device is a device of a self-compression type that elastically compresses the electrode laminated portion of the electrode body by the power storage device itself. Therefore, no binding member needs to be separately prepared, or external binding by a simple binding member is enough in use of the power storage device.

Further, the above-mentioned power storage device is formed by joining the case body constituting the second primary wall portion and the four side wall portions to the lid constituting the first primary wall portion, and thus a power storage device of a self-compression type can be easily produced as mentioned below, and the power storage device can be inexpensive.

When the power storage device is placed for use in such a position that the electrode body axial direction and the electrode body thickness direction of the electrode body are each arranged in parallel to a horizontal direction, the impregnated electrolytic solution flowing out of the electrode body in charging and discharging is confirmed to be much likely to flow out from the lower portions of both the end portions in the electrode body axial direction of the electrode laminated portion.

To address this, the above-mentioned power storage device includes a plurality of the bent ridge portions having any one of a configuration of extending from the lower side to the upper side at the axial direction inner side, being bent, and extending further to the axial outer side and a configuration of being bent from the lower side at the axial inner side and extending to the axial outer side. The bent ridge portions each press the electrode laminated portion to restrict movement of the impregnated electrolytic solution to the lower portions of the both end portions of the electrode laminated portion. Pressing the electrode laminated portion by these bent ridge portions makes it hard for the impregnated electrolytic solution to move from the upper side to the lower side and to move from the axial inner side to the axial outer side, so that the impregnated electrolytic solution is restrained from moving to the lower portions of the both end portions. Accordingly, the impregnated electrolytic solution can be prevented from flowing outside the electrode body through the lower portions of the both end portions of the electrode body in use of the power storage device.

Herein, as the "power storage device", for example, secondary batteries such as a lithium-ion secondary battery, capacitors such as a lithium ion capacitor, and all-solid-state batteries can be exemplified.

Further, the "bent ridge portions" may be provided in at least any one of the first primary wall portion and the second primary wall portion of the case. Alternatively, a metal-made or resin-made interposing member may be provided between the first primary wall portion of the case and the electrode laminated portion of the electrode body or between the second primary wall portion of the case and the electrode laminated portion of the electrode body, and this interposing member may be provided with the bent ridge portions.

Further, the first primary wall portion, the second primary wall portion, and the interposing member may be provided only with the bent ridge portions or provided with a protrusion having a different configuration from the bent ridge portions in addition to the bent ridge portions.

(2) Further, in the power storage device described in the above (1), preferably, an interposing member is provided in any one of between the first primary wall portion of the case and the electrode laminated portion of the electrode body and between the second primary wall portion of the case and the electrode laminated portion of the electrode body, and a plurality of the bent ridge portions are provided in the interposing member.

In the above power storage device, the interposing member is placed in at least any one of between the first primary wall portion of the case and the electrode laminated portion of the electrode body and between the second primary wall portion of the case and the electrode laminated portion of the electrode body, and the above-mentioned bent ridge portions are provided in this interposing member. Accordingly, the bent ridge portions are unnecessary to be provided in the first primary wall portion or the second primary wall portion of the case.

(3) Further, in the power storage device described in the above (1), preferably, a plurality of the bent ridge portions are provided in at least any one of the first primary wall portion and the second primary wall portion of the case.

In the above-mentioned power storage device, the bent ridge portions are provided in at least any one of the first primary wall portion and the second primary wall portion of the case, and accordingly, there is no need to place the interposing member provided with the bent ridge portions between the first primary wall portion of the case and the electrode body or between the second primary wall portion of the case and the electrode body, resulting in reduction in the number of components.

(4) Another aspect of the present disclosure is to provide a method for producing a power storage device comprising: a case; an electrode body housed in the case; and an impregnated electrolytic solution impregnated in the electrode body, the case being of a parallelepiped box-like shape and provided with: a first primary wall portion of a rectangular shape; a second primary wall portion of a rectangular shape, facing the first primary wall portion; and four side wall portions of rectangular shapes, each connecting the first primary wall portion and the second primary wall portion and extending in a case thickness direction, the electrode body being configured as a flat wound electrode body in which a positive electrode plate of a strip shape and a negative electrode plate of a strip shape are flat-wound via a pair of separators of strip shapes, the electrode body including an electrode laminated portion of a parallelepiped shape in which the positive electrode plate, the negative electrode plate, and the separators are laminated in a flat plate-like shape in an electrode body thickness direction, and the electrode body being housed in the case in such a position that the electrode body thickness direction is in parallel to the case thickness direction, wherein the case includes: a case body of a bottomed rectangular cylindrical shape configuring the second primary wall portion and the four side wall portions and having an opening of a rectangular shape configured by the four side wall portions; and a lid of a rectangular shape configuring the first primary wall portion and having a lid peripheral edge portion joined to an entire circumference of an opening peripheral edge portion of the opening of the case body, the first primary wall portion and the second primary wall portion of the case elastically compress the electrode laminated portion of the electrode body in the electrode body thickness direction, the power storage device includes a plurality of bent ridge portions protruding toward a thickness direction inner side of the case thickness direction in the case; the bent ridge portions having any one of: a configuration of extending at an axial inner side from a lower side to an upper side in the electrode body axial direction, being bent to an axial outer side in the electrode body axial direction, and extending further to the axial outer side ; and a configuration of being bent at the axial inner side from the lower side to the axial outer side, and extending further to the axial outer side when the power storage device is placed in a manner that the electrode body axial direction and the electrode body thickness direction of the electrode body are in parallel to a horizontal direction, and the bent ridge portions being configured to press the electrode laminated portion of the electrode body by elastic compression of the first primary wall portion and the second primary wall portion to restrict movement of the impregnated electrolytic solution to a lower portion of both end portions in the electrode body axial direction of the electrode laminated portion, wherein the method includes: housing the electrode body in the case body; pressing and compressing the electrode laminated portion of the electrode body in the electrode body thickness direction by placing the lid on the electrode body housed in the case body and applying an external force on the first primary wall portion configured by the lid and on the second primary wall portion of the case body; joining the lid peripheral edge portion of the lid to the opening peripheral edge portion of the opening of the case body over an entire circumference in a state in which the electrode body is pressed and compressed to form the case; and releasing the external force after the joining.

In a conventional rectangular battery, a case is configured with a case body of a bottomed rectangular cylindrical shape constituting a first primary wall portion, a second primary wall portion, and three side wall portions of the case and configured with a lid constituting another side wall portion. The battery with such a configuration is difficult to be produced as a battery of a self-compression type. This is because a space between the first primary wall portion and the second primary wall portion of the case body is made narrower than a thickness of the electrode body or a sum of thicknesses of the electrode body and the interposing member in a battery provided with the above-mentioned interposing member for pressing and compressing the electrode laminated portion of the electrode body in the battery after assembling, so that the electrode body and the like is difficult to be inserted in the case body.

On the other hand, in the above-mentioned method for producing the power storage device, the electrode body is firstly housed in the case body of the bottomed rectangular cylindrical shape constituting the second primary wall portion and the four side wall portions in a step of the housing, and thus the electrode body can be easily housed in the case body. After that, by the above-mentioned processes of the pressing and compressing, the joining, and the releasing, the self-compression-type power storage device which elastically compresses the electrode laminated portion of the electrode body by the power storage device itself can be easily produced.

As a method of joining the lid to the case body in the process of the joining, for example, joining by welding such as laser welding and joining by swaging may be adopted.

(5) Further, in the method for producing the power storage device in the above (4), preferably, the power storage device is provided with an interposing member in any one of between the first primary wall portion of the case and the electrode laminated portion of the electrode body and between the second primary wall portion of the case and the electrode laminated portion of the electrode body, a plurality of the bent ridge portions are provided in the interposing member, the housing is to overlap the electrode body and the interposing member on the electrode laminated portion of the electrode body and to house in the case body, and the pressing and compressing is to press the electrode laminated portion of the electrode body and the interposing member in the electrode body thickness direction.

In the above-mentioned method for producing the power storage device, the power storage device is produced with the above-mentioned interposing member, and thus the power storage device in which the electrode laminated portion of the electrode body is properly pressed by the bent ridge portions of the interposing member can be produced.

(6) In the method for producing the power storage device according to the above (4), preferably, a plurality of the bent ridge portions are provided in at least any one of the first primary wall portion and the second primary wall portion of the case, and the pressing and compressing is to press the electrode laminated portion of the electrode body in the electrode body thickness direction by the bent ridge portions provided in the case.

In the above method for producing the power storage device, the interposing member constituting the bent ridge portions is not provided inside the case body, and thus the processes of the housing and the pressing and compressing can be performed easily.

### BRIEF DESCRIPTION OF THE DRAWINGS

FIG. 1 is a perspective view of a battery in a first embodiment;
FIG. 2 is an exploded perspective view of the battery in the first embodiment;
FIG. 3 is a cross-sectional view of the battery along a case width direction and a case thickness direction, taken along a line A-A in FIGs. 1 and 4 in the first embodiment;
FIG. 4 is a plan view of the battery in the first embodiment 1 when seen from a thickness direction inner side of an interposing member;
FIG. 5 is a perspective view of an electrode body in the first embodiment;
FIG. 6 is a flow chart showing a method of producing the battery in the first embodiment;
FIG. 7 is an explanatory view illustrating a state in which an electrode body and an interposing member are housed in a case body to explain the method of producing the battery in the first embodiment;
FIG. 8 is an explanatory view of the method of producing the battery in the first embodiment, illustrating a state in which an electrode laminated portion of the electrode body and the interposing member are pressed in an electrode body thickness direction by applying an external force in a pressing and compressing step;
FIG. 9 is an explanatory view of the method of producing the battery in the first embodiment, illustrating a state in which a lid peripheral edge portion of a lid is laser-welded to an opening peripheral edge portion of the case body in a joining step;
FIG. 10 is a cross-sectional view corresponding to FIG. 3 along a case width direction and a case thickness direction of the battery in a second embodiment; and
FIG. 11 is a plan view of the battery in the second embodiment when seen from a thickness direction inner side of the lid.

### DETAILED DESCRIPTION OF THE EXEMPLARY EMBODIMENTS

### First Embodiment

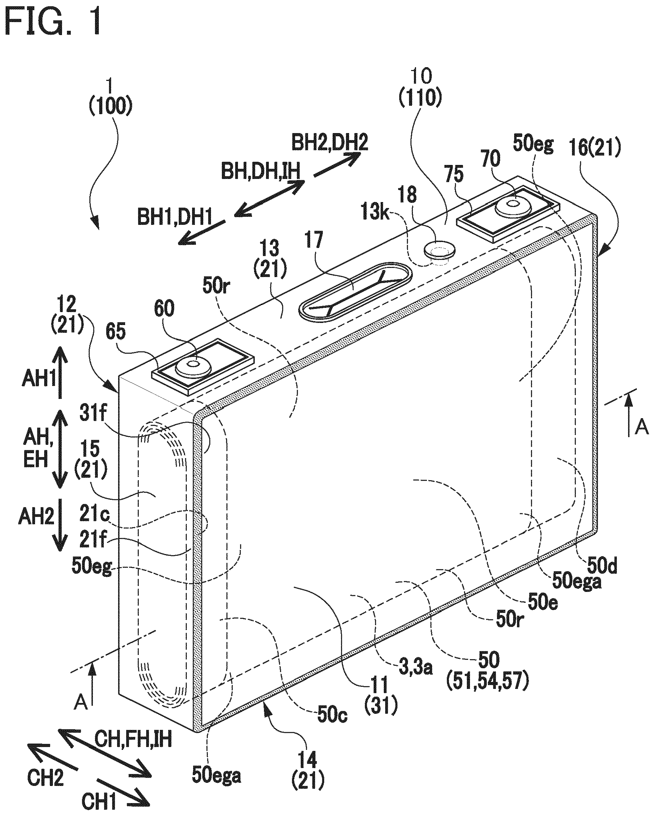

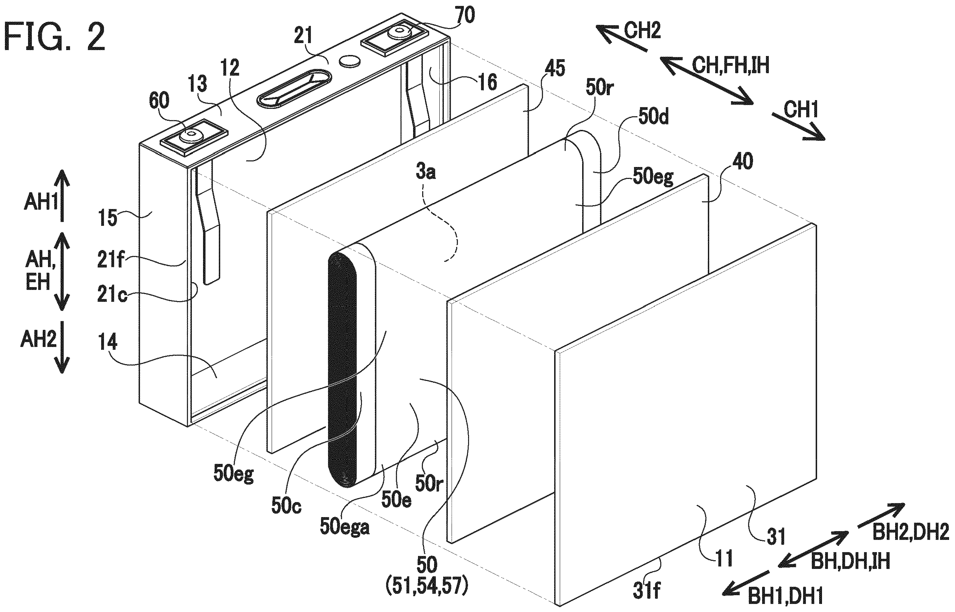

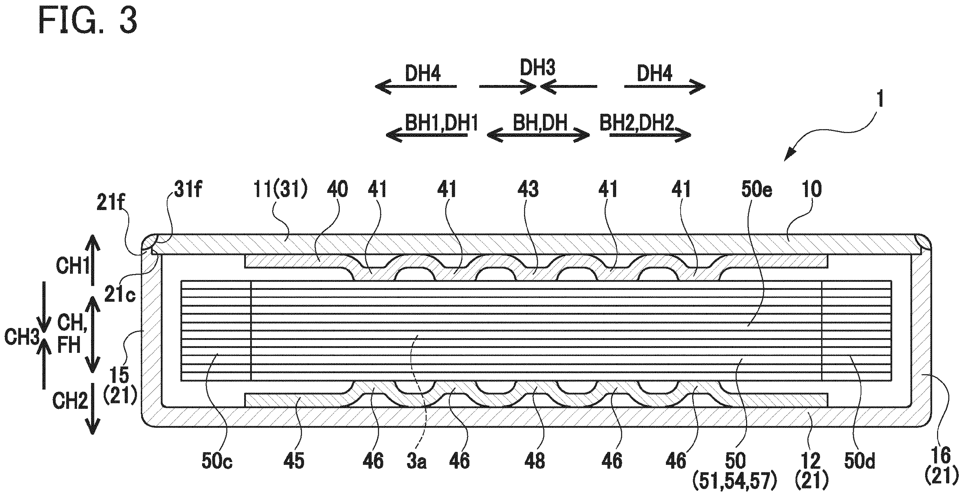

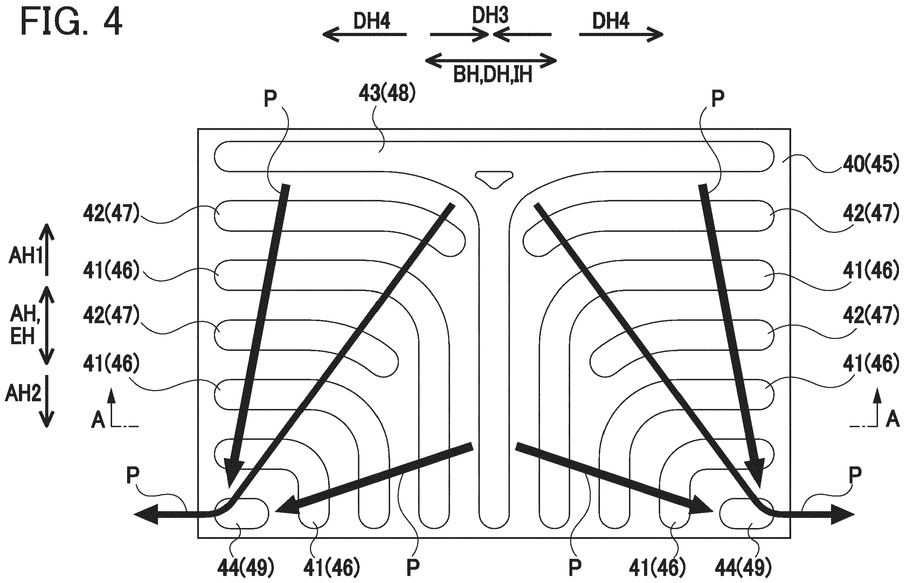

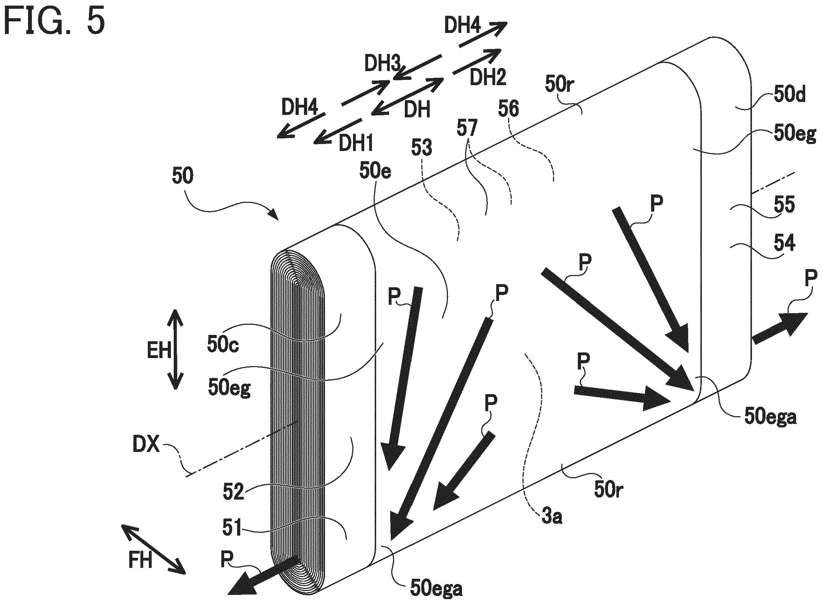

A first embodiment of the present disclosure is explained in detail below with reference to the accompanying drawings. FIG. 1 is a perspective view of a battery (a power storage device) 1 in the first embodiment. FIG. 2 is an exploded perspective view of the battery 1. FIG. 3 is a cross-sectional view of the battery 1. Further, FIG. 4 is a plan view of the battery 1 when seen from a thickness direction inner side CH3 of interposing members 40 and 45. Further, FIG. 5 is a perspective view of an electrode body 50. In the following explanation, a case height direction AH, a case width direction BH, a case thickness direction CH, an electrode body axial direction DH, an electrode body width direction EH, and an electrode body thickness direction FH are defined as directions indicated in FIGs. 1 to 5. The battery 1 is a rectangular, more specifically, rectangular parallelepiped box-like shaped sealed lithium-ion secondary battery which will be installed in vehicles such as a hybrid car, a plug-in hybrid car, and an electric automobile. The battery 1 is placed for use such that the case width direction BH (the electrode body axial direction DH) and the case thickness direction CH (the electrode body thickness direction FH) are each in parallel to a horizontal direction IH.

The battery 1 is configured with a case 10, a flat wound electrode body 50 housed in the case 10, a positive terminal 60 and a negative terminal 70 each supported by the case 10, and others. The electrode body 50 is covered with a not-shown bag-shaped insulating holder formed of an insulating film in the case 10. The case 10 houses two interposing members 40 and 45 which are overlapped on the electrode body 50 (see FIGs. 2 to 4 but not shown in FIG. 1). Further, the case 10 contains an electrolytic solution 3, a part of which is impregnated in the electrode body 50 as an impregnated electrolytic solution 3a and the remainder of which is accumulated on a second side wall portion 14 as a lower wall portion of the case 10.

Among these components, the case 10 is made of metal (e.g., aluminum in the first embodiment). This case 10 has a parallelepiped box-like shape and includes a first primary wall portion 11, a second primary wall portion 12, and four side wall portions 13 to 16 (specifically, a first side wall portion 13, a second side wall portion 14, a third side wall portion 15, and a fourth side wall portion 16), each of which is of a rectangular plate-like shape.

The first primary wall portion 11 and the second primary wall portion 12 have wider area than the side wall portions 13 to 16. The first primary wall portion 11 and the second primary wall portion 12 oppose to each other. The first primary wall portion 11 is positioned on one side CH1 (specifically, a right forward side in FIGs. 1 and 2 and an upper side in FIG. 3) of the case thickness direction CH, and the second primary wall portion 12 is positioned on another side CH2 (specifically, a left rear side in FIGs. 1 and 2 and a lower side in FIG. 3) of the case thickness direction CH.

On the other hand, the side wall portions 13 to 16 each join the first primary wall portion 11 and the second primary wall portion 12 and extend in the case thickness direction CH. The first side wall portion 13 and the second side wall portion 14 oppose to each other in a manner that the first side wall portion 13 is positioned on an upper side AH1 in the case height direction AH and the second side wall portion 14 is positioned on a lower side AH2 in the case height direction AH. The third side wall portion 15 and the fourth side wall portion 16 oppose to each other in a manner that the third side wall portion 15 is positioned on one side BH1 in the case width direction BH, and that the fourth side wall portion 16 is positioned on another side BH2 in the case width direction BH.

A safety valve 17 is provided in the first side wall portion 13 as an upper wall portion of the case 10 and will break and open when an internal pressure of the case 10 exceeds a valve opening pressure. Further, a liquid inlet 13k for communication between inside and outside of the case 10 is provided in the first side wall portion 13 and is hermetically sealed by a disc-shaped sealing member 18 made of aluminum.

Further, in the first side wall portion 13, the positive terminal 60 is fixed to a vicinity of an end portion on the one side BH1 in the case width direction BH. Specifically, the positive terminal 60 is formed by swaging and connecting a plurality of aluminum-made metal components and fixed to the first side wall portion 13 in a state insulated from the first side wall portion 13 via a resin portion 65 formed of a plurality of resin members. This positive terminal 60 is connected and conducted with a positive current collecting portion 50c of the electrode body 50 in the case 10, and also penetrates through the first side wall portion 13 to extend outside the case 10.

Further, in the first side wall portion 13, a negative terminal 70 is fixed to a vicinity of an end portion on the another side BH2 in the case width direction BH. Specifically, the negative terminal 70 is formed by swaging and connecting a plurality of copper-made metal components and fixed to the first side wall portion 13 in a state insulated from the first side wall portion 13 via a resin portion 75 formed of a plurality of resin members. The negative terminal 70 is connected and conducted with a negative current collecting portion 50d of the electrode body 50 in the case 10, and also penetrates through the first side wall portion 13 to extend outside the case 10.

The case 10 is configured with a case body 21 of a bottomed rectangular cylindrical shape having a rectangular opening 21c and a lid 31 of a rectangular plate-like shape. The case body 21 constitutes the second primary wall portion 12 and the four side wall portions 13 to 16, and the opening 21c of the case body 21 is formed by the four side wall portions 13 to 16. On the other hand, the lid 31 constitutes the first primary wall portion 11 to close the opening 21c of the case body 21. Specifically, a lid peripheral edge portion 31f of the lid 31 is joined or welded to an opening peripheral edge portion 21f of the opening 21c of the case body 21 over an entire circumference.

Next, the electrode body 50 is explained (see FIGs. 1 to 3 and FIG. 5). This electrode body 50 is formed in such a manner that a strip-shaped positive electrode plate 51 and a strip-shaped negative electrode plate 54 are overlapped via a pair of strip-shaped separators 57 formed of resin-made porous films, and the thus overlapped electrode plates 51,54 and the separators 57 are wound around a winding axis DX into a cylindrical shape, and then pressed into to a flat shape. To be more specific, the electrode body 50 includes a pair of electrode round portions 50r positioned on both end portions in the electrode body width direction EH and an electrode laminated portion 50e held between the pair of the electrode round portions 50r. Each of the electrode round portions 50r is a portion in which the positive electrode plate 51, the negative electrode plate 54, and the separators 57 are bent into a semicylindrical shape and overlapped. On the other hand, the electrode laminated portion 50e is a parallelepiped portion in which the positive electrode plate 51, the negative electrode plate 54, and the separators 57 are laminated in a flat-plate like shape in the electrode body thickness direction FH. Further, the electrode body 50 has a positive current collecting portion 50c explained later on an end portion on one side DH1 in the electrode body axial direction DH along the winding axis DX and a negative current collecting portion 50d explained later on an end portion on another side DH2 in the electrode body axial direction DH.

This electrode body 50 is housed in the case 10 in such a position that the electrode body axial direction DH is in parallel to the case width direction BH, the electrode body width direction EH is in parallel to the case height direction AH, and the electrode body thickness direction FH is in parallel to the case thickness direction CH. Further, the electrode body 50 is housed in the case 10 while the electrode laminated portion 50e is compressed in the electrode body thickness direction FH (i.e., in the case thickness direction CH). Namely, the battery 1 is a battery of a self-compression type in which the case 10 is elastically deformed to elastically compress the electrode laminated portion 50e in the electrode body thickness direction FH by the first primary wall portion 11 and the second primary wall portion 12 of the case 10.

The positive electrode plate 51 includes a positive current collecting foil 52 formed of a strip-shaped aluminum foil. Both primary surfaces of the positive current collecting foil 52 are each formed with a positive active material layer 53 of a strip shape including positive active material particles that can occlude and discharge lithium ions. In the positive electrode plate 51, one end portion in the width direction has no positive active material layer 53 on the positive current collecting foil 52, and the positive current collecting foil 52 is exposed. This exposed portion of the positive current collecting foil 52 spirally protrudes to the one side DH1 in the electrode body axial direction DH from the electrode laminated portion 50e in the electrode body 50 to form the above-mentioned positive current collecting portion 50c. The positive current collecting portion 50c is connected to the positive terminal 60.

The negative electrode plate 54 includes a negative current collecting foil 55 formed of a strip-shaped copper foil. Both primary surfaces of the negative current collecting foil 55 are each formed with a negative active material layer 56 of a strip shape including negative active material particles that can occlude and discharge lithium ions. In the negative electrode plate 54, one end portion in the width direction has no negative active material layer 56 on the negative current collecting foil 55, and the negative current collecting foil 55 is exposed. This exposed portion of the negative current collecting foil 55 spirally protrudes to the another side DH2 in the electrode body axial direction DH from the electrode laminated portion 50e in the electrode body 50 to form the above-mentioned negative current collecting portion 50d. The negative current collecting portion 50d is connected to the negative terminal 70.

Next, interposing members 40 and 45 are explained (see FIGs. 2 to 4, but a protruding portion is not illustrated in FIG. 2). The interposing members 40 and 45 are made of metal, specifically, aluminum in the first embodiment, of a rectangular shape in planar view. The one interposing member 40 is interposed between the first primary wall portion 11 of the case 10 and the electrode laminated portion 50e of the electrode body 50. The other interposing member 45 is interposed between the second primary wall portion 12 of the case 10 and the electrode laminated portion 50e of the electrode body 50. The interposing members 40 and 45 are the same configuration from each other, and thus the following explanation will be directed to both the interposing members 40 and 45.

The interposing members 40 and 45 protrude toward the thickness direction inner side CH3 in the case thickness direction CH, namely toward the electrode laminated portion 50e of the electrode body 50 and include a plurality of protruding portions of first bent ridge portions 41 and 46, second bent ridge portions 42 and 47, T-shaped ridge portions 43 and 48, and I-shaped ridge portions 44 and 49, which are to press the electrode laminated portion 50e in the electrode body thickness direction FH.

The first bent ridge portions 41 and 46 are plurally provided in the interposing members 40 and 45. Each of the first bent ridge portions 41 and 46 is configured to extend at the axial direction inner side DH3 from a lower side AH2 to an upper side AH1 in the electrode body axial direction DH, bend to an axial direction outer side DH4 in the electrode body axial direction DH, and then extend further to the axial direction outer side DH4 when the battery 1 is placed in such a position that the electrode body axial direction DH and the electrode body thickness direction FH of the electrode body 50 are in parallel to the horizontal direction IH, i.e., in a posture for use of the battery 1. These first bent ridge portions 41 and 46 press the electrode laminated portion 50e of the electrode body 50 in the electrode body thickness direction FH by elastic compression of the first primary wall portion 11 and the second primary wall portion 12 of the case 10 so that the impregnated electrolytic solution 3a is restricted from moving to lower portions 50ega of both end portions 50eg of the electrode laminated portion 50e in the electrode body axial direction DH while such a movement of the impregnated electrolytic solution 3a is illustrated with an arrow P in FIGs. 4 and 5.

The second bent ridge portions 42 and 47 are also plurally provided in the interposing members 40 and 45. Each of the second bent ridge portions 42 and 47 is configured to bend at the axial direction inner side DH3 from the lower side AH2 to the axial direction outer side DH4 and extend further to the axial direction outer side DH4 when the battery 1 is placed in the above-mentioned position for use. These second bent ridge portions 42 and 47 press the electrode laminated portion 50e of the electrode body 50 in the electrode body thickness direction FH by elastic compression of the first primary wall portion 11 and the second primary wall portion 12 of the case 10 so that the impregnated electrolytic solution 3a is restricted from moving to the lower portions 50ega of the both end portions 50eg of the electrode laminated portion 50e.

The T-shaped ridge portions 43 and 48 are provided in the interposing members 40 and 45, respectively. The T-shaped ridge portions 43 and 48 are each configured to extend at the axial direction inner side DH3 (specifically, a center in the electrode body axial direction DH) from the lower side AH2 to the upper side AH1, bend individually to respective sides of the axial direction outer side DH4, and further extend to the axial direction outer side DH4 to form a T-like shape when the battery 1 is placed at the position for use.

Further, the I-shaped ridge portions 44 and 49 are plurally provided in the interposing members 40 and 45. The I-shaped ridge portions 44 and 49 are each configured to extend from the axial direction inner side DH3 to the axial direction outer side DH4 in a vicinity of the lower portion 50ega of the respective both end portions 50eg of the electrode laminated portion 50e.

As mentioned above, in the first embodiment, the T-shaped ridge portions 43 and 48 and the I-shaped ridge portions 44 and 49 are provided in addition to the first bent ridge portions 41 and 46 and the second bent ridge portions 42 and 47, and thus the entire electrode laminated portion 50e of the electrode body 50 can be pressed further evenly.

In the battery 1 of the first embodiment, the electrode laminated portion 50e of the electrode body 50 is elastically compressed in the electrode body thickness direction FH by the first primary wall portion 11 and the second primary wall portion 12 of the case 10. In other words, this battery 1 is a self-compression type in which the battery 1 itself elastically compresses the electrode laminated portion 50e of the electrode body 50. Accordingly, in use of the battery 1, a binding member does not have to be separately prepared, or outer binding by a simple binding member is enough.

Further, the battery 1 is formed by joining the case body 21 constituting the second primary wall portion 12 and the four side wall portions 13 to 16 with the lid 31 constituting the first primary wall portion 11, and thus the battery 1 of the self-compression type can be easily produced and the battery 1 can be inexpensive as explained below.

When the battery 1 is placed for use in such a position that the electrode body axial direction DH and the electrode body thickness direction FH of the electrode body 50 are in parallel to the horizontal direction IH, the impregnated electrolytic solution 3a flowing out from inside to outside of the electrode body 50 in association with charging and discharging moves as indicated with arrows P in FIGs. 4 and 5, and thus the impregnated electrolytic solution 3a is likely to easily flow out of the lower portions 50ega of the both end portions 50eg in the electrode body axial direction DH of the electrode laminated portion 50e.

To address the above, the battery 1 is provided with a plurality of first bent ridge portions 41 and 46 each formed to extend at the axial direction inner side DH3 from the lower side AH2 to the upper side AH1, be bent, and then extend toward the axial direction outer side DH4, and a plurality of second bent ridge portions 42 and 47 each formed to be bent at the axial direction inner side DH3 from the lower side AH2 and extend to the axial direction outer side DH4. These first bent ridge portions 41 and 46 and the second bent ridge portions 42 and 47 are each to press the electrode laminated portion 50e of the electrode body 50 in order to restrict movement of the impregnated electrolytic solution 3a to the lower portions 50ega of the both end portions 50eg of the electrode laminated portion 50e.

Consequently, pressing the electrode laminated portion 50e of the electrode body 50 by the first bent ridge portions 41 and 46 and the second bent ridge portions 42 and 47 makes it difficult for the impregnated electrolytic solution 3a in the electrode body 50 to move from the upper side AH1 to the lower side AH2 and to move from the axial direction inner side DH3 to the axial direction outer side DH4, so that the impregnated electrolytic solution 3a is restrained from moving to the lower portions 50ega of the both end portions 50eg of the electrode laminated portion 50e. Therefore, the impregnated electrolytic solution 3a can be prevented from flowing out of the electrode body 50 through the lower portions 50ega of the both end portions 50eg of the electrode laminated portion 50e in use of the battery 1.

Further, in the present embodiment 1, the interposing member 40 is placed between the first primary wall portion 11 of the case 10 and the electrode laminated portion 50e of the electrode body 50, and the interposing member 45 is placed between the second primary wall portion 12 of the case 10 and the electrode laminated portion 50e of the electrode body 50. The first bent ridge portions 41 and 46 and the second bent ridge portion 42 and 47 are provided in these interposing members 40 and 45. Accordingly, any bent ridge portions are unnecessary to be provided in the first primary wall portion 11 and the second primary wall portion 12 of the case 10.

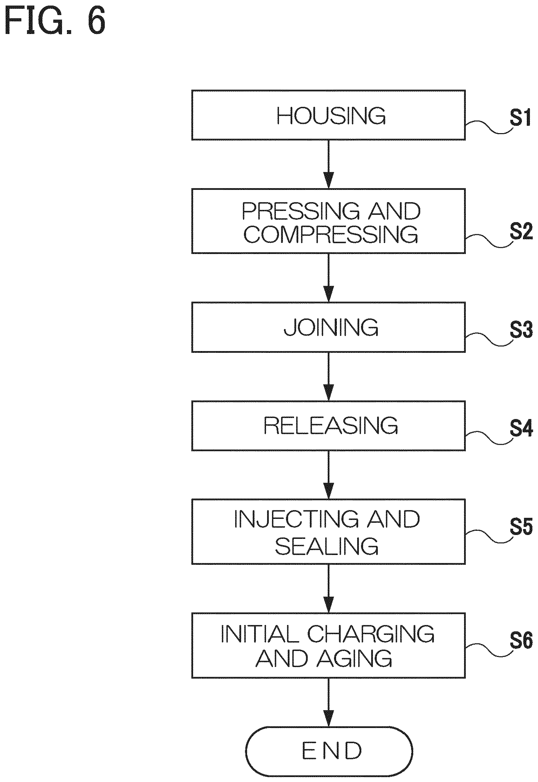

Next, a method for producing the above-mentioned battery 1 is explained (see FIGs. 6 to 9). The case body 21, in which the positive terminal 60 and the negative terminal 70 have been fixed, and the lid 31 are prepared in advance. Further, the positive electrode plate 51, the negative electrode plate 54, and a pair of the separators 57, each of which is of a strip shape, are wound cylindrically around the winding axis DX and pressed into a flat shape to form the electrode body 50. This electrode body 50 is then wrapped by a bag-shaped insulating holder (not shown).

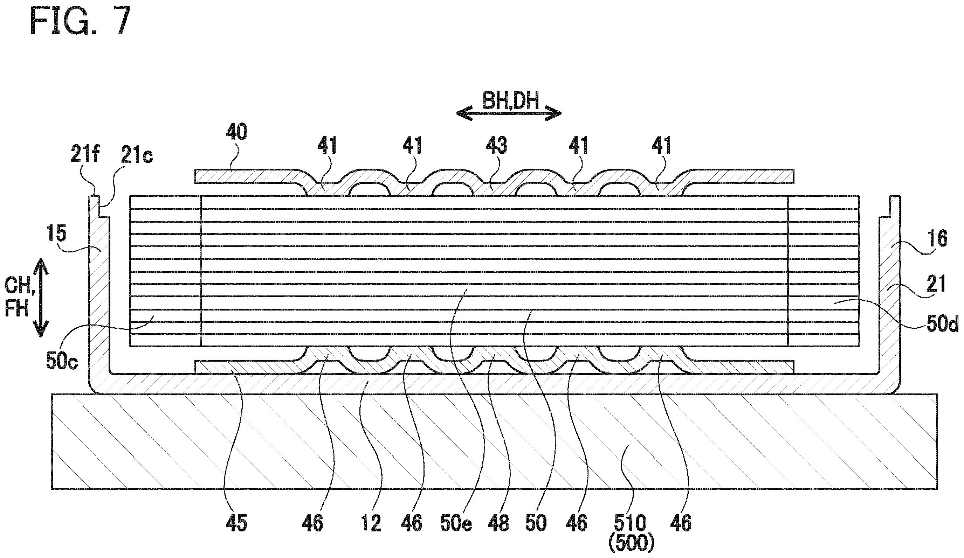

In a "housing step S1" (see FIG. 6), the electrode body 50 wrapped with the insulating holder and the interposing members 40 and 45 are housed in the case body 21, in which the positive terminal 60 and the negative terminal 70 have been fixed in advance, in a manner that the interposing members 40 and 45 are overlapped on front and rear sides of the electrode body 50, respectively (see FIG. 7). To be specific, the case body 21 is placed on a flat setting table 510 of a press device 500 in such a position that the entire second primary wall portion 12 of the case body 21 comes to contact with the setting table 510. Thereafter, the interposing member 45 is firstly housed in the case body 21, and then the electrode body 50 is housed in the case body 21 in such a position that the electrode body axial direction DH is in parallel to the case width direction BH, the electrode body width direction EH is in parallel to the case height direction AH, and the electrode body thickness direction FH is in parallel to the case thickness direction CH. Thus, the electrode laminated portion 50e of the electrode body 50 is overlapped on the interposing member 45. Subsequently, the interposing member 40 is overlapped on the electrode laminated portion 50e of the electrode body 50. Thereafter, the positive current collecting portion 50c of the electrode body 50 and the positive terminal 60 fixed to the case body 21 are connected by laser welding. Further, the negative current collecting portion 50d of the electrode body 50 and the negative terminal 70 fixed to the case body 21 are connected by laser welding.

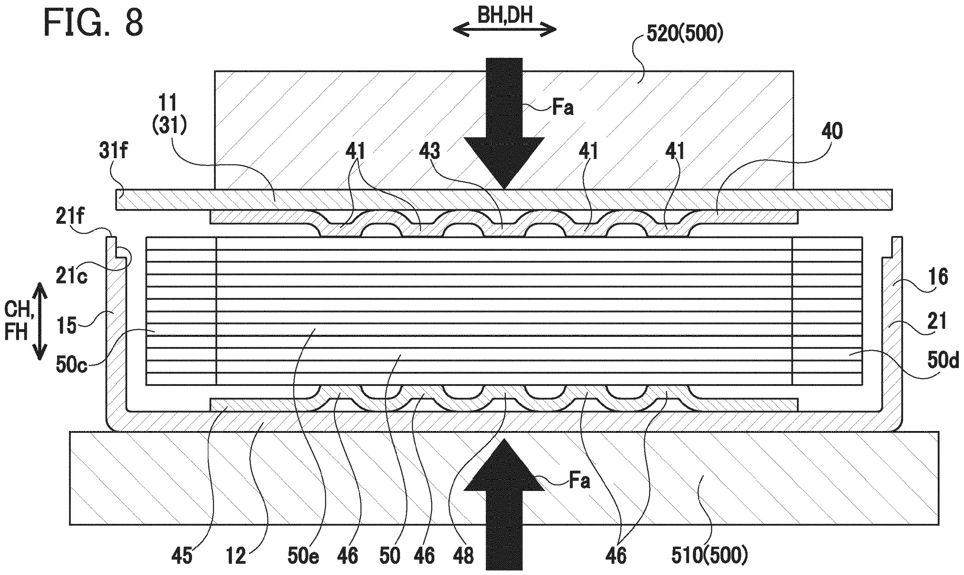

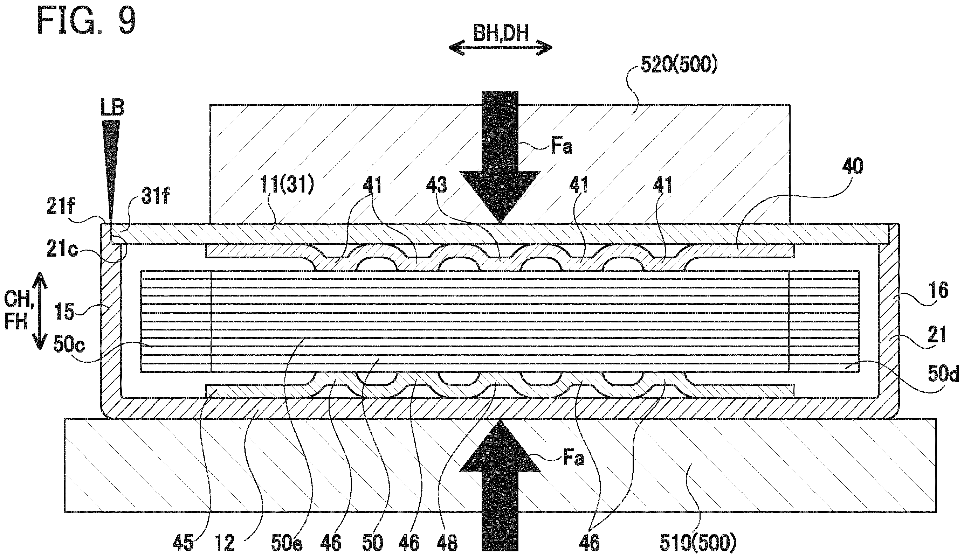

Next, in a "pressing and compressing step S2" (see FIG. 6), the lid 31 is placed over the interposing member 45, the electrode body 50, and the interposing member 40, which are housed in the case body 21. An external force Fa is applied to the first primary wall portion 11 constituted by the lid 31 and the second primary wall portion 12 of the case body 21 to press the interposing member 45, the electrode laminated portion 50e of the electrode body 50, and the interposing member 40 in the electrode body thickness direction FH for compressing the electrode laminated portion 50e (see FIG. 8). Specifically, a press part 520 of the press device 500 is brought into contact with the first primary wall portion 11 constituted by the lid 31 to apply the external force Fa to the first primary wall portion 11 and the second primary wall portion 12 by holding the lid 31 and the case body 21 between the press part 520 and the setting table 510. Then, the interposing member 45, the electrode laminated portion 50e of the electrode body 50, and the interposing member 40 are pressed in the electrode body thickness direction FH to compress the electrode laminated portion 50e, so that the lid peripheral edge portion 31f of the lid 31 is entirely brought into contact with the opening peripheral edge portion 21f of the opening 21c of the case body 21 (see FIG. 9).

Next, in a "joining step S3" (see FIG. 6), while the electrode body 50 is being pressed and compressed by the press device 500, the lid peripheral edge portion 31f of the lid 31 is joined to the opening peripheral edge portion 21f of the case body 21 over the entire circumference to form the case 10 (FIG. 9). In the first embodiment, the laser beam LB is irradiated on the lid peripheral edge portion 31f and the opening peripheral edge portion 21f for laser welding, and thus the lid peripheral edge portion 31f and the opening peripheral edge portion 21f are entirely joined.

Next, in a "releasing step S4" (see FIG. 6), the above-mentioned external force Fa is released. Namely, the press part 520 of the press device 500 is moved away from the lid 31 to release the external force Fa. At that time, the case 10 has already been formed in the joining step S3, and thus the compressed electrode laminated portion 50e does not return to its original state (i.e., original thickness). After releasing the external force Fa, the electrode laminated portion 50e is in an elastically compressed state by the first primary wall portion 11 and the second primary wall portion 12 of the case 10.

Next, in the "injecting and sealing step S5", the electrolytic solution 3 is injected into the case 10 through the liquid inlet 13k so that the electrolytic solution 3 is impregnated in the electrode body 50. Thereafter, the liquid inlet 13k is covered by the sealing member 18 from outside and the sealing member 18 is laser-welded to the case 10 to hermetically seal the sealing member 18 with the case 10.

Next, in the "initial charging and aging step S6", a charging device (not shown) is connected to the battery 1 to perform initial charging to the battery 1. Thereafter, the initially charged battery 1 is left stand for a predetermined time for aging. Thus, the battery 1 is completed.

Herein, in a conventional rectangular battery, a case 10 is configured by a bottomed rectangular cylindrical case body constituting a first primary wall portion 11, a second primary wall portion 12, and three side wall portions (specifically, a second side wall portion 14, a third side wall portion 15, and a fourth side wall portion 16) and a lid constituting a first side wall portion 13. By the battery having such a configuration, however, it is difficult to produce a battery of a self-compression type. A space between the first primary wall portion 11 and the second primary wall portion 12 of the case body is made to be narrower than a total thickness of the electrode body 50 and the interposing members 40 and 45 in order to press and compress the electrode laminated portion 50e of the electrode body 50 in a post-assembled battery. Accordingly, the electrode body 50 and the interposing members 40 and 45 are difficult to be inserted in the case body in the conventional battery.

On the contrary, in the above-mentioned method for producing the battery 1, the electrode body 50 and the interposing members 40 and 45 are housed in the bottomed rectangular cylindrical case body 21 constituting the second primary wall portion 12 and the four side wall portions 13 to 16 in the housing step S1, so that the electrode body 50 and the interposing members 40 and 45 can be easily housed in the case body 21. Thereafter, by performing the pressing and compressing step S2, the joining step S3, and the releasing step S4, the battery 1 of the self-compression type, in which the battery 1 itself elastically compresses the electrode laminated portion 50e of the electrode body 50, can be easily produced.

Further in the present embodiment 1, the interposing members 40 and 45 are used for producing the battery 1, and thus the battery 1 can be produced in such a manner that the electrode laminated portion 50e of the electrode body 50 is properly pressed by the first bent ridge portions 41 and 46 and the second bent ridge portions 42 and 47 of the interposing members 40 and 45.

### Second Embodiment

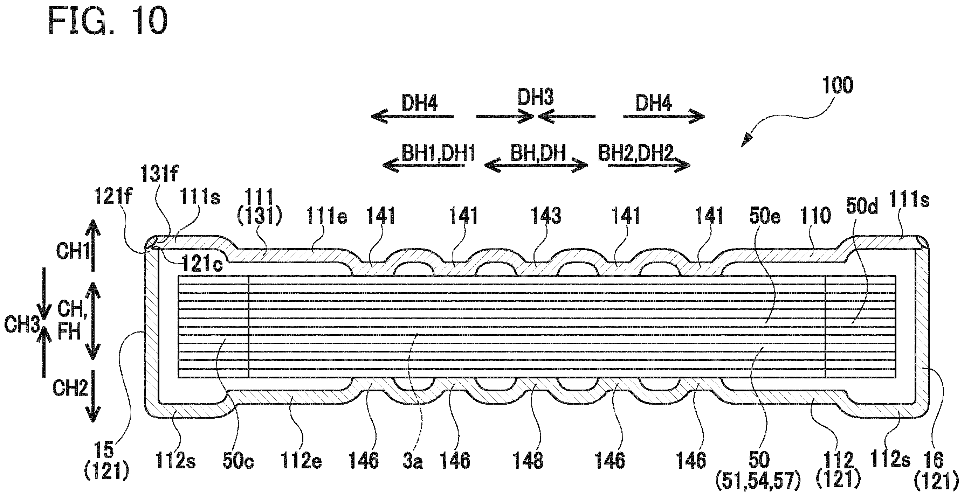

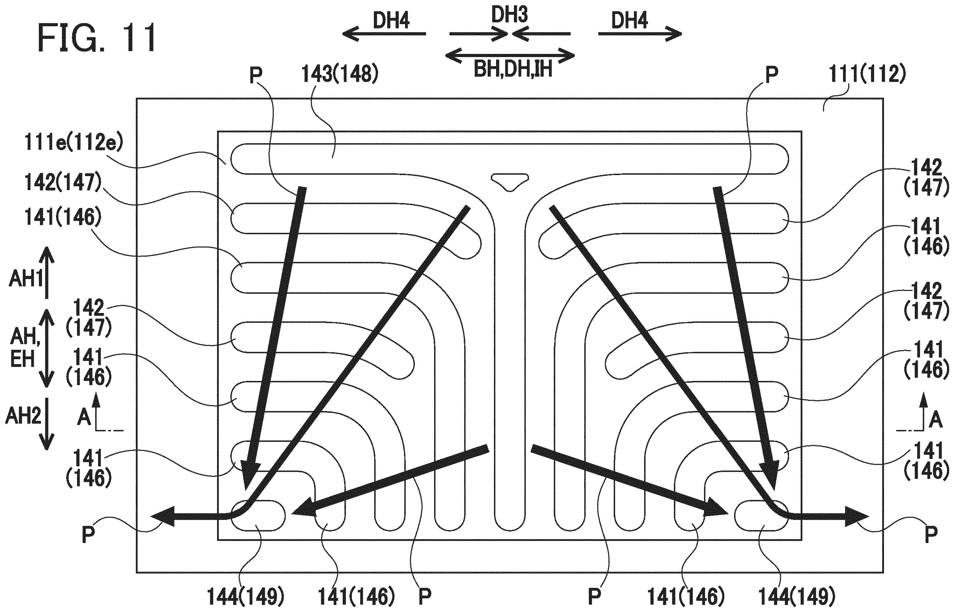

Next, a second embodiment is explained (see FIGs. 10 and 11). Explanation for a similar part with the first embodiment is omitted or simplified. In the battery 1 of the first embodiment, the interposing members 40 and 45 are placed between the first primary wall portion 11 of the case 10 and the electrode laminated portion 50e of the electrode body 50 and between the second primary wall portion 12 and the electrode laminated portion 50e of the electrode body 50, respectively.

On the other hand, in a battery (a power storage device) 100 of the second embodiment, there is no interposing members placed between a first primary wall portion 111 of a case 110 and the electrode laminated portion 50e of the electrode body 50 and between a second primary wall portion 112 of the case 110 and the electrode laminated portion 50e of the electrode body 50. In the second embodiment, unlike the case 10 of the first embodiment, the case 110 is configured such that the first primary wall portion 111 and the second primary wall portion 112 are each provided with protruding portions of first bent ridge portions 141 and 146, second bent ridge portions 142 and 147, T-shaped ridge portions 143 and 148, and I-shaped ridge portions 144 and 149.

Specifically, the first primary wall portion 111 of the case 110 in the second embodiment has a center portion 111e of a rectangular shape in planar view formed in such a manner that the entire center portion 111e other than a peripheral portion Ills protrudes toward the thickness direction inner side CH3 of the case thickness direction CH, namely protrudes toward the electrode laminated portion 50e. The center portion 111e includes a plurality of protruding portions of the first bent ridge portions 141, the second bent ridge portions 142, the T-shaped ridge portion 143, and the I-shaped ridge portions 144 to press the electrode laminated portion 50e of the electrode body 50 to the electrode body thickness direction FH. These protruding portions of the first bent ridge portions 141, the second bent ridge portions 142, the T-shaped ridge portion 143, and the I-shaped ridge portions 144 have the same configuration and the function with the protruding portions of the first embodiment, i.e., the first bent ridge portions 41, the second bent ridge portions 42, the T-shaped ridge portion 43, and the I-shaped ridge portions 44, which are provided in the interposing member 40 of the first embodiment.

Further, the second primary wall portion 112 of the case 110 in the second embodiment has a center portion 112e of a rectangular shape in planar view formed in such a manner that the entire center portion 112e other than a peripheral portion 112s protrudes toward the thickness direction inner side CH3 of the case thickness direction CH, namely, protrudes toward the electrode laminated portion 50e. The center portion 112e includes a plurality of protruding portions of the first bent ridge portions 146, the second bent ridge portions 147, the T-shaped ridge portion 148, and the I-shaped ridge portion 149 to press the electrode laminated portion 50e of the electrode body 50 to the electrode body thickness direction FH. These protruding portions of the first bent ridge portions 146, the second bent ridge portions 147, the T-shaped ridge portion 148, and the I-shaped ridge portions 149 have the same configuration and the function with the protruding portions of first embodiment, i.e., the first bent ridge portions 46, the second bent ridge portions 47, the T-shaped ridge portion 48, and the I-shaped ridge portions 49, which are provided in the interposing member 45 of the first embodiment.

The battery 100 of the second embodiment also elastically compresses the electrode laminated portion 50e of the electrode body 50 in the electrode body thickness direction FH by the first primary wall portion 111 and the second primary wall portion 112 of the case 110. Namely, the battery 100 is a self-compression type of elastically compressing the electrode laminated portion 50e of the electrode body 50 by the battery 100 itself. Accordingly, in use of the battery 100, a binding member does not have to be separately prepared, or binding from outside by a simple binding member is enough. Further, the case 110 is configured by joining the case body 121 constituting the second primary wall portion 112 and the four side wall portions 13 to 16 and the lid 131 constituting the first primary wall portion 111. Therefore, the battery 100 of the self-compression type can be easily produced and the battery 100 can be produced inexpensively.

Further, the battery 100 is provided with the first bent ridge portions 141 and 146, and the second bent ridge portions 142 and 147. These first bent ridge portions 141 and 146 and the second bent ridge portions 142 and 147 are each to press the electrode laminated portion 50e of the electrode body 50, so that the impregnated electrolytic solution 3a hardly moves from the upper side AH1 to the lower side AH2 and also hardly moves from the axial direction inner side DH3 to the axial direction outer side DH4, thereby restricting movement of the impregnated electrolytic solution 3a to the lower portions 50ega of the both end portions 50eg of the electrode laminated portion 50e. Therefore, the impregnated electrolytic solution 3a can be restrained from flowing outside the electrode body 50 through the lower portions 50ega of the both end portions 50eg of the electrode laminated portion 50e in use of the battery 100.

Further, in the second embodiment, the first primary wall portion 111 and the second primary wall portion 112 of the case 110 are provided with the first bent ridge portions 141 and 146 and the second bent ridge portions 142 and 147. Accordingly, any interposing members provided with bent ridge portions are not placed between the first primary wall portion 111 of the case 110 and the electrode body 50 or between the second primary wall portion 112 of the case 110 and the electrode body 50, thus reducing the number of components.

Next, a method for producing the battery 100 of the second embodiment is explained. Firstly, in the housing step S1, the electrode body 50 wrapped with the insulating holder is housed in the case body 121 in which the positive terminal 60 and the negative terminal 70 are fixed. In the second embodiment, no interposing members are provided. Thereafter, as similar to the first embodiment, the positive current collecting portion 50c and the negative current collecting portion 50d of the electrode body 50 are laser-welded to the positive terminal 60 and the negative terminal 70 which are fixed to the case body 121, respectively.

Next, in the pressing and compressing step S2, the lid 131 is placed over the electrode body 50 housed in the case body 121. The external force Fa is applied to the first primary wall portion 111 constituted by the lid 131 and the second primary wall portion 112 of the case body 121 to press and compress the electrode laminated portion 50e of the electrode body 50 in the electrode body thickness direction FH. At that time, in the second embodiment, the electrode laminated portion 50e is pressed in the electrode body thickness direction FH by the first bent ridge portions 141 and 146, the second bent ridge portions 142 and 147, the T-shaped ridge portions 143 and 148, and the I-shaped ridge portions 144 and 149, which are provided in the case 110. Then, a lid peripheral edge portion 131f of the lid 131 is brought into contact with the opening peripheral edge portion 121f of the opening 121c of the case body 121 over an entire circumference. This step is performed by the press device 500 (see FIG. 9) similar to the first embodiment.

Next, in the joining step S3, as similar to the first embodiment, the lid peripheral edge portion 131f of the lid 131 is entirely laser-welded to the opening peripheral edge portion 121f of the case body 121 to form the case 110. Thereafter, as similar to the first embodiment, the releasing step S4, the injecting and sealing step S5, and the initial charging and aging step S6 are performed to complete the battery 100.

In the method for producing the battery 100 of the second embodiment, the electrode body 50 is housed in the bottomed rectangular cylindrical case body 121 constituting the second primary wall portion 112 and the four side wall portions 13 to 16 in the housing step S 1, so that housing of the electrode body 50 in the case body 121 can be easily performed. Thereafter, by performing the pressing and compressing step S2, the joining step S3, and the releasing step S4, the battery 100 of the self-compression type can be easily produced. Especially in the second embodiment, any interposing members having the bent ridge portions are not placed in the case body 121, and thus the housing step S1 and the pressing and compressing step S2 can be easily performed. Other than that, the similar parts with the first embodiment have the same operations and effects with the first embodiment.

The present disclosure has been explained with the first and second embodiments, but the present disclosure is not limited to the first and second embodiments and can be applied with any appropriate modifications without departing from the scope of the disclosure.

For example, in the first embodiment, the interposing member 40 provided with the bent ridge portions 41 and 42 is placed between the first primary wall portion 11 of the case 10 and the electrode body 50, and the interposing member 45 provided with the bent ridge portions 46 and 47 is placed between the second primary wall portion 12 of the case 10 and the electrode body 50. Alternatively, one interposing member provided with bent ridge portions may be placed between the first primary wall portion and the electrode body or between the second primary wall portion and the electrode body.

In the second embodiment, the first primary wall portion 111 of the case 110 is provided with the bent ridge portions 141 and 142, and the second primary wall portion 112 of the case 110 is provided with the bent ridge portions 146 and 147. Alternatively, any one of the first primary wall portion 111 and the second primary wall portion 112 may be provided with the bent ridge portion.

### Reference Signs List

- 1, 100: Battery (power storage device)
- 3a: Impregnated electrolytic solution
- 10, 110: Case
- 11, 111: First primary wall portion
- 12, 112: Second primary wall portion
- 13: First side wall portion (upper wall portion)
- 14: Second side wall portion (lower wall portion)
- 15: Third side wall portion
- 16: Fourth side wall portion
- 21, 121: Case body
- 21c, 121c: Opening
- 21f, 121f: Opening peripheral edge portion
- 31, 131: Lid
- 31f, 131f: Lid peripheral edge portion
- 40, 45: Interposing member
- 41, 46, 141, 146: First bent ridge portion
- 42, 47, 142, 147: Second bent ridge portion
- 50: Electrode body
- 50e: Electrode laminated portion
- 50eg: End portion (of the electrode laminated portion)
- 50ega: Lower portion (of the end portion)
- 51: Positive electrode plate
- 54: Negative electrode plate
- 57: Separator
- AH: Case height direction
- AH1: Upper side
- AH2: Lower side
- CH: Case thickness direction
- CH3: Thickness direction inner side
- DH: Electrode body axial direction
- DH3: Axial direction inner side
- DH4: Axial direction outer side
- FH: Electrode body thickness direction
- IH: Horizontal direction
- Fa: External force
- S1: Housing step
- S2: Pressing and compressing step
- S3: Joining step
- S4: Releasing step

## Claims

1. A power storage device (1;100) comprising:
a case (10;110);
an electrode body (50) housed in the case (10;110); and
an impregnated electrolytic solution (3a) impregnated in the electrode body (50),
the case (10;110) being of a parallelepiped box-like shape and provided with:
a first primary wall portion (11;111) of a rectangular shape;
a second primary wall portion (12;112) of a rectangular shape opposing to the first primary wall portion (11;111); and
four side wall portions (13,14,15,16), each of which is of a rectangular shape, connects the first primary wall portion (11;111) and the second primary wall portion (12; 112), and extends in a case thickness direction (CH),
the electrode body (50) being configured as a flat wound electrode body in which a positive electrode plate (51) of a strip shape and a negative electrode plate (54) of a strip shape are flat-wound via a pair of separators (57) of strip shapes,
the electrode body (50) including an electrode laminated portion (50e) of a parallelepiped shape in which the positive electrode plate (51), the negative electrode plate (54), and the separators (57) are laminated in a flat plate-like shape in an electrode body thickness direction (FH), and
the electrode body (50) being housed in the case (10;110) in such a position that the electrode body thickness direction (FH) is in parallel to the case thickness direction (CH), wherein
the case (10;110) includes:
a case body (21;121) of a bottomed rectangular cylindrical shape configuring the second primary wall portion (12;112) and the four side wall portions (13,14,15,16) and being formed with an opening (21c;121c) of a rectangular shape configured by the four side wall portions (13,14,15,16); and
a lid (31; 131) of a rectangular shape configuring the first primary wall portion (11;111) in which a lid peripheral edge portion (31f;131f) is joined to an entire circumference of an opening peripheral edge portion (21f;121f) of the opening (21c;121c) of the case body (21; 121),
the first primary wall portion (11;111) and the second primary wall portion (12; 112) of the case (10;110) elastically compress the electrode laminated portion (50e) of the electrode body (50) in the electrode body thickness direction (FH),
the power storage device (1;100) includes a plurality of bent ridge portions (41,42,46,47) protruding toward a thickness direction inner side (CH3) of the case thickness direction (CH) in the case (10;110),
the bent ridge portions (41,42,46,47,141,142,146,147) having any one of: a configuration of extending at an axial inner side (DH3) from a lower side (AH2) to an upper side (AH1) of the electrode body axial direction (DH), being bent to an axial outer side (DH4) in the electrode body axial direction (DH), and extending further to the axial outer side (DH4); and a configuration of being bent at the axial inner side (DH3) to the axial outer side (DH4) from the lower side (AH2) and extending further to the axial outer side (DH4) when the power storage device (1;100) is placed in a manner that the electrode body axial direction (DH) and the electrode body thickness direction (FH) of the electrode body (50) are in parallel to a horizontal direction (IH), and
the bent ridge portions (41,42,46,47.141.142.146.147) being configured to press the electrode laminated portion (50e) of the electrode body (50) by elastic compression of the first primary wall portion (11;111) and the second primary wall portion (12;112) to restrict movement of the impregnated electrolytic solution (3a) to a lower portion (50ega) of both end portions (50eg) in the electrode body axial direction (DH) of the electrode laminated portion (50e).

2. The power storage device (1) according to claim 1, wherein
an interposing member (40,45) is provided in any one of between the first primary wall portion (11) of the case (10) and the electrode laminated portion (50e) of the electrode body (50) and between the second primary wall portion (12) of the case (10) and the electrode laminated portion (50e) of the electrode body (50), and
a plurality of the bent ridge portions (41,42,46,47) are provided in the interposing member (40,45).

3. The power storage device (100) according to claim 1, wherein a plurality of the bent ridge portions (141,142,146,147) are provided in at least any one of the first primary wall portion (111) and the second primary wall portion (112) of the case (110).

4. A method for producing a power storage device (1,100) comprising:
a case (10;110);
an electrode body (50) housed in the case (10;110); and
an impregnated electrolytic solution (3a) impregnated in the electrode body (50),
the case (10;110) being of a parallelepiped box-like shape and provided with:
a first primary wall portion (11;111) of a rectangular shape;
a second primary wall portion (12;112) of a rectangular shape, facing the first primary wall portion (11;111); and
four side wall portions (13,14,15,16) of rectangular shapes, each connecting the first primary wall portion (11;111) and the second primary wall portion (12;112) and extending in a case thickness direction (CH),
the electrode body (50) being configured as a flat wound electrode body in which a positive electrode plate (51) of a strip shape and a negative electrode plate (54) of a strip shape are flat-wound via a pair of separators (57) of strip shapes,
the electrode body (50) including an electrode laminated portion (50e) of a parallelepiped shape in which the positive electrode plate (51), the negative electrode plate (54), and the separators (57) are laminated in a flat plate-like shape in an electrode body thickness direction (FH), and
the electrode body (50) being housed in the case (10;110) in such a position that the electrode body thickness direction (FH) is in parallel to the case thickness direction (CH), wherein
the case (10;110) includes:
a case body (21;121) of a bottomed rectangular cylindrical shape configuring the second primary wall portion (12;112) and the four side wall portions (13,14,15,16) and having an opening (21c;121c) of a rectangular shape configured by the four side wall portions (13,14,15,16); and
a lid (31;131) of a rectangular shape configuring the first primary wall portion (11;111) and having a lid peripheral edge portion (31f;131f) joined to an entire circumference of an opening peripheral edge portion (21f;121f) of the opening (21c;121c) of the case body (21; 121),
the first primary wall portion (11;111) and the second primary wall portion (12; 112) of the case (10;110) elastically compress the electrode laminated portion (50e) of the electrode body (50) in the electrode body thickness direction (FH),
the power storage device (1;100) includes a plurality of bent ridge portions (41,42,46,47) protruding toward a thickness direction inner side (CH3) of the case thickness direction (CH) in the case (10;110);
the bent ridge portions (41,42,46,47,141,142,146,147) having any one of: a configuration of extending at an axial inner side (DH3) from a lower side (AH2) to an upper side (AH1) in the electrode body axial direction (DH), being bent to an axial outer side (DH4) in the electrode body axial direction (DH), and extending further to the axial outer side (DH4); and a configuration of being bent at the axial inner side (DH3) from the lower side (AH2) to the axial outer side (DH4) , and extending further to the axial outer side (DH4) when the power storage device (1;100) is placed in a manner that the electrode body axial direction (DH) and the electrode body thickness direction (FH) of the electrode body (50) are in parallel to a horizontal direction (IH), and
the bent ridge portions (41,42,46,47,141,142,146,147) being configured to press the electrode laminated portion (50e) of the electrode body (50) by elastic compression of the first primary wall portion (11;111) and the second primary wall portion (12;112) to restrict movement of the impregnated electrolytic solution (3a) to a lower portion (50ega) of both end portions (50eg) in the electrode body axial direction (DH) of the electrode laminated portion (50e), wherein
the method includes:
housing (S1) the electrode body (50) in the case body (21;121);
pressing and compressing (S2) the electrode laminated portion (50e) of the electrode body (50) in the electrode body thickness direction (FH) by placing the lid (31;131) on the electrode body (50) housed in the case body (21;121) and applying an external force (Fa) on the first primary wall portion (11; 111) configured by the lid (31; 131) and on the second primary wall portion (12;112) of the case body (21; 121);
joining (S3) the lid peripheral edge portion (31f;131f) of the lid (31; 131) to the opening peripheral edge portion (21f;121f) of the opening (21c;121c) of the case body (21;121) over an entire circumference in a state in which the electrode body (50) is pressed and compressed to form the case (10;110); and
releasing (S4) the external force (Fa) after the joining (S3).

5. The method for producing the power storage device (1) according to claim 4, wherein
the power storage device (1) is provided with an interposing member (40,45) in any one of between the first primary wall portion (11) of the case (10) and the electrode laminated portion (50e) of the electrode body (50) and between the second primary wall portion (12) of the case (10) and the electrode laminated portion (50e) of the electrode body (50),
a plurality of the bent ridge portions (41,42,46,47) are provided in the interposing member (40,45),
the housing (S1) is to overlap the electrode body (50) and the interposing member (40,45) on the electrode laminated portion (50e) of the electrode body (50) and to house in the case body (21), and
the pressing and compressing (S2) is to press the electrode laminated portion (50e) of the electrode body (50) and the interposing member (40,45) in the electrode body thickness direction (FH).

6. The method for producing the power storage device (110) according to claim 4, wherein
a plurality of the bent ridge portions (141,142,146,147) are provided in at least any one of the first primary wall portion (111) and the second primary wall portion (112) of the case (110), and
the pressing and compressing (S2) is to press the electrode laminated portion (50e) of the electrode body (50) in the electrode body thickness direction (FH) by the bent ridge portions (141,142,146,147) provided in the case (110).
